# EUROPEAN PATENT SPECIFICATION

(11) **EP 3 100 337 B1**
(45) Date of publication and mention of the grant of the patent: **12.01.2022**
(21) Application number: 14879972.9
(22) Date of filing: 27.01.2014
(51) Int. Cl.: H02J 7/04, B66B 7/00, B66B 1/30, H02J 7/00

(54) **CHARGE ALGORITHM FOR BATTERY PROPELLED ELEVATOR**
LADEALGORITHMUS FÜR BATTERIEGETRIEBENEN AUFZUG
ALGORITHME DE CHARGE POUR ASCENSEUR PROPULSÉ À L'AIDE D'UNE BATTERIE

(43) Date of publication of application: 07.12.2016
(73) Proprietor: Otis Elevator Company, Farmington CT 06032 (US)
(72) Inventor: MEZZADRI, Carlo, I-20063 Milano (IT); COLOMBARI, Carlo, I-40010 Sala Bolognese (IT); FOSCHINI, Gianluca, I-48100 Ravenna (IT)
(74) Representative: Dehns
(86) International application number: PCT/US2014/013140
(87) International publication number: WO 2015/112172

(56) References cited:
- WO-A1-2005/108270
- WO-A1-2013/161445
- WO-A1-2013/179324
- JP-A- 2007 084 229
- JP-A- 2009 247 107
- US-A1- 2001 017 236
- US-A1- 2010 065 380
- US-A1- 2010 126 809
- US-A1- 2011 139 547
- US-A1- 2011 147 130
- US-A1- 2011 285 356
- US-A1- 2012 285 774
- None

## Description

### BACKGROUND

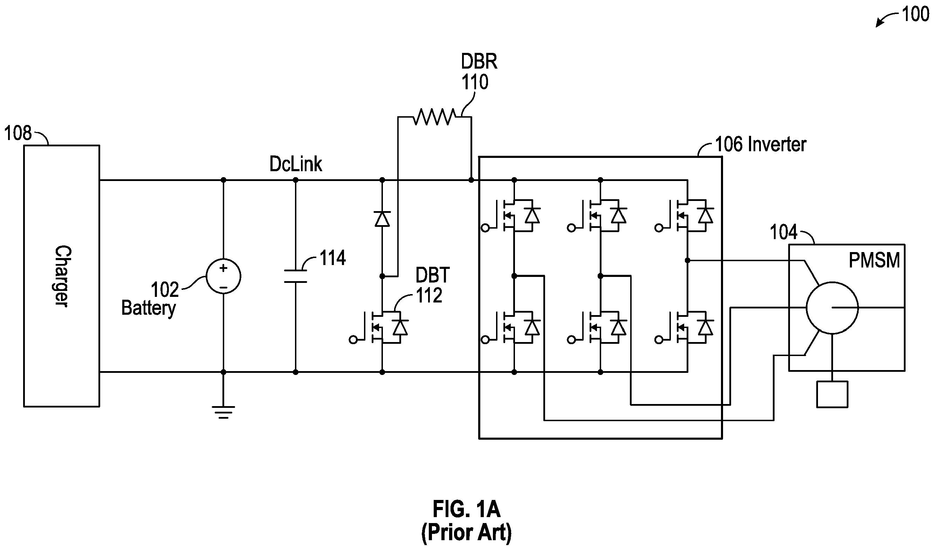

In a given elevator system or environment, one or more sources may be used to provide power. For example, FIG. 1A shows an architecture or circuit 100 for an elevator system. The architecture 100 may include a battery 102 serving as a source of power for a motor 104, such as a permanent-magnet synchronous motor (PMSM). An inverter 106, denoted by the boxed components in FIG. 1A, may be used to generate currents for the motor 104.

The battery 102 may be a lead acid battery. The battery 102 may be charged by a charger 108. In a typical environment or application, the battery 102 may be slightly overcharged to maintain it at 100% of state of charge (SoC), increasing the standby power demand and degrading the energy efficiency of the system 100 during standby

As the elevator operates, regenerative energy may be generated. Due to the battery 102 having been charged to (nearly) 100% SoC, a dynamic braking resistor (DBR) 110 and/or a dynamic braking transistor (DBT) 112 may be used to consume the regenerative energy. In this manner, most of the elevator energy is wasted, degrading the running energy efficiency. Performance is adversely affected by this configuration. WO 2013/179324 discloses an elevator control system including a power manager unit, operable to manage the flow of power between the power storage device and the motor drive, and a power storage device including a supercapacitor unit and a battery unit

### BRIEF SUMMARY

An embodiment is directed to a method for recovering energy associated with the operation of an elevator as claimed in claim 1.

An embodiment is directed to an apparatus as claimed in claim 10.

Additional embodiments are described below.

### BRIEF DESCRIPTION OF THE DRAWINGS

The present disclosure is illustrated by way of example and not limited in the accompanying figures in which like reference numerals indicate similar elements.
FIG. 1A illustrates a power architecture in accordance with the prior art;
FIG. 1B is a block diagram of components of an elevator system in an exemplary embodiment;
FIG. 2 illustrates a flow chart of an exemplary algorithm; and
FIG. 3 illustrates a flow chart of an exemplary method.

### DETAILED DESCRIPTION

It is noted that various connections are set forth between elements in the following description and in the drawings (the contents of which are included in this disclosure by way of reference). It is noted that these connections in general and, unless specified otherwise, may be direct or indirect and that this specification is not intended to be limiting in this respect. In this respect, a coupling between entities may refer to either a direct or an indirect connection.

Exemplary embodiments of apparatuses, systems and methods are described for accepting or delivering power or energy rapidly. In some embodiments, devices used to accept/deliver power or energy may act in a so-called peak shaving mode, enabling the devices to be as small as possible. Accordingly, device cost may be minimized. In some other embodiments of apparatuses, the component (e.g. ultra-capacitors) able to accept or deliver energy rapidly is directly connected with drive DC-link, accordingly device cost may be minimized due to the electrical topology itself.

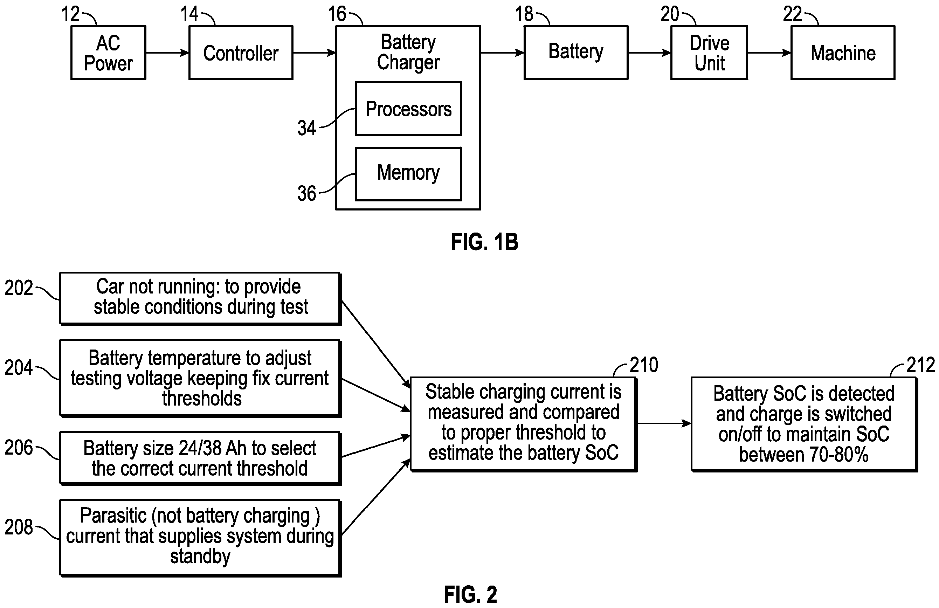

FIG. 1B is a block diagram of components of an elevator system 10 in an exemplary embodiment. The various entities shown in FIG. 1B may be arranged in any order or sequence, and the system 10 is merely one example of such an arrangement. For example, while the arrangement of FIG. 1B shows a battery charger 16 and battery 18 effectively in series with an AC power source 12, in some embodiments the battery charger 16 and/or the battery 18 may lie in parallel with the AC power source 12.

Elevator system 10 includes the source of AC power 12, such as an electrical main line. The AC power 12 is provided to a controller 14, which may include circuit breakers, meters, controllers, etc. From the controller 14, AC power is provided to the battery charger 16, which may convert the AC power to DC power to charge the battery 18. Battery 18 may be a lead-acid battery or other type of battery or combination of different types of batteries and ultra-capacitors. Battery 18 may power a drive unit 20. Drive unit 20 may include a control circuit board and a power circuit board. The power circuit board may convert DC power from battery 18 to AC drive signals, which drive a machine 22. The AC drive signals may be multiphase (e.g., three-phase) drive signals for a three-phase motor in machine 22.

The charger 16 may include one or more processors 34, and memory 36 having instructions stored thereon that, when executed, cause the charger 16 or the system 10 to perform one or more methodological acts as described herein. In some embodiments, the processors 34 and/or memory 36 may be located in another entity, such as a controller (e.g., controller 14).

In some embodiments, the charger 16 may provide for a buffer with respect to a state of charge (SoC) on the battery 18, such that the battery can accept charge resulting from operation of the elevator (e.g., regenerative energy). In other words, and as described further below, the charger 16 may ensure that at various points in time the battery 18 is charged to a level or value that is less than 100% SoC, such that the battery 18 can subsequently accept additional charge based on the operation of the elevator. In some embodiments, SoC detection may be performed by one or more other entities, such as a logic board or drive.

As part of one or more charging algorithms, potentially executed by the controller 14 or the charger 16, SoC may be determined or measured during periods when the elevator is idle or not in use in order to avoid the impact from fluctuations that are characteristic of operating the elevator. In some instances, the battery 18 may stabilize before an accurate reading is obtained.

The controller 14 causes the battery 18 to be charged to (approximately) 100% SoC periodically (e.g. monthly). Such charging is used to help maintain battery state of health in terms of nominal capacity over long periods of time (e.g., years), avoiding a typical memory-effect of lead acid batteries. The battery 18 is charged to approximately 100% SoC in order to prolong battery life

Turning now to FIG. 2, a flow chart of an exemplary algorithm 200 is shown. The algorithm 200 may be used to provide for intelligent or smart charging of a battery (e.g., battery 18) with SoC detection.

Blocks 202-208 may correspond to inputs to the algorithm 200. For example, block 202 may correspond to a condition or confirmation that an elevator car is not running. Such a condition/confirmation may be used to ensure stable conditions during a SoC test, and may be used to achieve a reliable SoC estimation of a battery that is loaded by an intermittent load, typical of an elevator application.

Block 204 may correspond to a determination of a temperature of a battery. Knowledge of the battery temperature may be used to adjust a testing and charging voltage while keeping or maintaining current thresholds insensitive to battery temperature and at the same time improving battery life and performance, both affected by battery cell temperature.

Block 206 may correspond to a determination of a battery size (e.g., 24/38 Amp hours (Ah)). Knowledge of the battery size and characteristics may be used to select one or more appropriate current thresholds.

Block 208 may correspond to a determination of the parasitic current that can affect the reliability of the SoC detection with a close circuit configuration. The parasitic current may supply the system 100 during standby. The parasitic current may be subtracted from a measured current during SoC testing to improve estimation accuracy.

Based on the determination of the charging current in block 210, the battery SoC may be estimated by comparing measured current and proper thresholds. Switching on or off the battery charge, SoC may be set at 70-80% as provided in block 212. Operating at a SoC that is less than 100% may provide for greater charging efficiency relative to operating at 100% SoC.

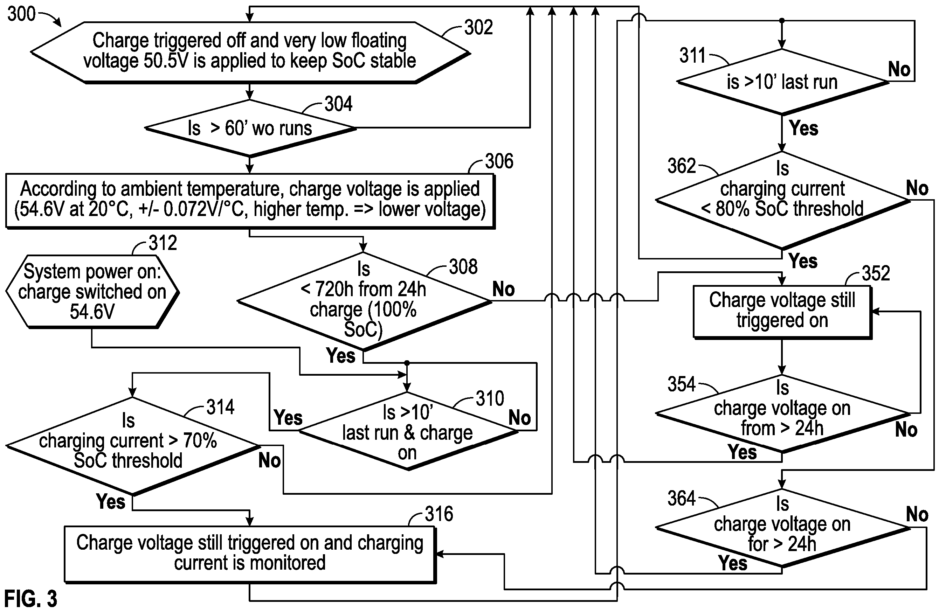

Turning now to FIG. 3, a flow chart of an exemplary method 300 is shown. The method 300 may be used to provide for intelligent or smart charging of a battery (e.g., battery 18) with SoC detection. In some embodiments, one or more aspects of the algorithm 200 of FIG. 2 may be incorporated into the method 300 of FIG. 3, or vice versa.

Block 302 may correspond to a starting point/operation for the method 300. In block 302, battery charge may be off. A low floating voltage of, e.g., 50.5 Volts (2.10V per cell) may be associated with a battery (e.g., battery 18) to maintain the SoC around 70-80% during standby phase. From block 302, flow may proceed to block 304.

In block 304, a determination may be made whether the time since the last elevator run is greater than a threshold (e.g., 60 minutes). If so (e.g., the "yes" path is taken out of block 304), flow may proceed from block 304 to block 306. Otherwise (e.g., the "no" path is taken out of block 304), flow may proceed from block 304 to block 302. The determination of block 304 may be used to ensure stability with respect to the SoC test that is performed as part of the method 300. A sufficient relaxation time may be used to stabilize battery chemistry of the battery, like lead acid.

In block 306, a charging voltage may be applied by the charger (e.g., charger 16) to a battery (e.g., battery 18 of FIG. 1B). The charging voltage may be a function of temperature, which may correspond to ambient temperature and/or the temperature of the battery. For example, at 20°C, the charging voltage may be applied at 54.6 Volts. An adjustment of plus-or-minus 0.072 Volts/°C may be made, where a higher temperature leads to a lower applied voltage. From block 306, flow may proceed to block 308.

In block 308, a determination may be made whether it has been less than some amount of time (e.g., approximately 720 hours or 30 days) from a so-called "complete charge cycle" where the battery is fully charged to (approximately) 100% SoC. If so (e.g., the "yes" path is taken out of block 308), flow may proceed from block 308 to block 310. Otherwise (e.g., the "no" path is taken out of block 308), flow may proceed from block 308 to block 352.

In conjunction with the flow from block 308 to block 310, system power may be turned on (block 312). In block 310, a determination may be made whether it has been greater than some amount of time (e.g., 10 minutes) since the last run and application of charging voltage (306). If so (e.g., the "yes" path is taken out of block 310), flow may proceed from block 310 to block 314. Otherwise (e.g., the "no" path is taken out of block 310), flow may remain at block 310.

In block 314, a determination may be made whether the current output from the charger is greater than a threshold, where the threshold may correspond to, e.g., 70% SoC. If so (e.g., the "yes" path is taken out of block 314), flow may proceed from block 314 to block 316. Otherwise (e.g., the "no" path is taken out of block 314), flow may proceed from block 314 to block 302.

In block 316, the recharge remains switched on. As part of block 316, a monitoring (e.g., continuous monitoring) of the charge current may be provided. From block 316, flow may proceed to block 311.

In block 311, a determination may be made whether it has been greater than some amount of time (e.g., 10 minutes) since the last run. If so (e.g., the "yes" path is taken out of block 311), flow may proceed from block 311 to block 362. Otherwise (e.g., the "no" path is taken out of block 311), flow may remain at block 311. The determination of block 311 may be performed in order to provide a sufficient relaxation time before reading charging current.

In block 362 a determination may be made whether the charge current is less than a threshold, where the threshold may correspond to, e.g., 80% SoC. If so (e.g., the "yes" path is taken out of block 362), flow may proceed from block 362 to block 302. Otherwise (e.g., the "no" path is taken out of block 362), flow may proceed from block 362 to block 364. The determination of block 362 may used to verify that the battery is charged enough to trigger the charge off.

In block 364, a determination may be made whether the charger has been on for a period of time greater than a threshold (e.g., approximately 24 hours or 1 day). The threshold may be selected to satisfy one or more safety requirements or parameters. In some embodiments, the threshold may be specified as a current associated with a charge of approximately 95% or 100%. If the determination of block 364 is answered in the affirmative (e.g., the "yes" path is taken out of block 364), flow may proceed from block 364 to block 302. Otherwise (e.g., the "no" path is taken out of block 364), flow may proceed from block 364 to block 316.

In block 352, the charger voltage may be remain on. Flow may proceed from block 352 to block 354.

In block 354, a determination may be made whether the charger has been on for a period of time greater than a threshold (e.g., 24 hours or 1 day). If so (e.g., the "yes" path is taken out of block 354), flow may proceed from block 354 to block 302. Otherwise (e.g., the "no" path is taken out of block 354), flow may proceed from block 354 to block 352. The determination of block 354 may be used to avoid any memory-effect as described above.

The values described above in connection with FIGS. 2 and 3 are merely illustrative. One skilled in the art would appreciate that the values used may be modified without departing from the scope of this disclosure. Moreover, the blocks or operations may execute in an order or sequence different from what is shown in FIGS. 2 and 3. In some embodiments, one or more of the blocks (or a portion thereof) may be optional. In some embodiments, additional blocks or operations not shown may be included.

In some embodiments various functions or acts may take place at a given location and/or in connection with the operation of one or more apparatuses, systems, or devices. For example, in some embodiments, a portion of a given function or act may be performed at a first device or location, and the remainder of the function or act may be performed at one or more additional devices or locations.

Embodiments may be implemented using one or more technologies. In some embodiments, an apparatus or system may include one or more processors, and memory having instructions stored thereon that, when executed by the one or more processors, cause the apparatus or system to perform one or more methodological acts as described herein. In some embodiments, one or more input/output (I/O) interfaces may be coupled to one or more processors and may be used to provide a user with an interface to an elevator system. Various mechanical components known to those of skill in the art may be used in some embodiments.

Embodiments may be implemented as one or more apparatuses, systems, and/or methods. In some embodiments, instructions may be stored on one or more computer-readable media, such as a transitory and/or non-transitory computer-readable medium. The instructions, when executed, may cause an entity (e.g., an apparatus or system) to perform one or more methodological acts as described herein.

Aspects of the disclosure have been described in terms of illustrative embodiments thereof. Numerous other embodiments, modifications and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional.

## Claims

1. A method (300) for recovering energy associated with the operation of an elevator, comprising:
determining, by a processing device (34), a battery charging current provided by a battery charger (16);
estimating a state of charge (SoC) of at least one battery (18) based on charging current acceptance capability; and
causing, by the processing device (34), a charging of the at least one battery (18) to within a threshold amount of 100% of SoC i.e. a level or value that is less than 100% SoC, such that the battery (18) is able to recover energy associated with elevator operation;
**characterized by** the method further comprising subsequent to charging the at least one battery (18) to within the threshold amount of 100% SoC, determining, by the processing device, that the at least one battery (18) has not been fully charged i.e. to approximately 100% SoC for an amount of time greater than a second threshold; and
causing, by the processing device, the at least one battery (18) to be charged for an amount of time greater than a third threshold, which causes the battery (18) to be charged to approximately 100% SoC, based on determining that the at least one battery (18) has not been fully charged for the amount of time greater than the second threshold.

2. The method (300) of claim 1, wherein the battery is charged under 100% of SoC; and/or
wherein the threshold corresponds to a value in the range of 60% to 95% percent of the full SoC.

3. The method (300) of claim 1 or 2, wherein the determination of the charging current and the SoC is done after a relaxation time detecting when the elevator car is running and waiting a proper time based on the load stress applied to battery (18).

4. The method (300) of claim 1, 2 or 3, wherein the temperature associated with the at least one battery (18) is detected to adjust testing and charge voltage to maintain stable charging current thresholds to estimate SoC and to extend battery life.

5. The method (300) of any preceding claim, wherein the size and characteristics of the at least one battery (18) are used to select the charging current thresholds to estimate SoC.

6. The method (300) of any preceding claim, wherein a parasitic current is estimated and considered to avoid impacting the determination of the charging current.

7. The method (300) of any preceding claim, wherein the at least one battery (18) comprises a lead acid battery.

8. The method of any preceding claim, wherein the second threshold is approximately 30 days, and wherein the third threshold is approximately 1 day

9. The method (300) of any preceding claim, further comprising:
causing the elevator to operate; and
charging the at least one battery (18) based on energy generated by the operation of the elevator.

10. An apparatus comprising:
at least one processor (34); and
memory (36) having instructions stored thereon that, when executed, cause the apparatus to:
determine that it has been greater than a first threshold amount of time since an elevator was last run;
cause a charger (16) to be turned on to charge a battery (18) of the elevator;
setting a charging voltage according to at least one of battery temperature and ambient temperature;
determine that it has been greater than a second threshold amount of time since the elevator was last run and application of the charging voltage;
determine that a current associated with the charger (18) is greater than a first threshold current based on one or more battery characteristics; and
cause the charger (16) to be maintained turned on to charge the battery (18);
**characterized in that**, subsequent to charging the at least one battery (18) to within the threshold amount of 100% SoC i.e. a level or value that is less than 100% SoC, the instructions cause the memory (36) to determine, by the processing device (34), that the at least one battery (18) has not been fully charged i.e. to approximately 100% SoC for an amount of time greater than a second threshold; and
cause, by the processing device (34), the at least one battery (18) to be charged for an amount of time greater than a third threshold, which causes the battery (18) to be charged to approximately 100% SoC, based on determining that the at least one battery (18) has not been fully charged for the amount of time greater than the second threshold; and preferably
wherein the second threshold is approximately 30 days, and wherein the third threshold is approximately 1 day.

11. The apparatus of claim 10, wherein the instructions, when executed, cause the apparatus to:
determine whether the charging current is less than a second threshold current subsequent to causing the charger (16) to be turned off; and preferably
wherein the first threshold current corresponds to approximately 60% of full state of charge (SoC), and wherein the second threshold current corresponds to approximately 95% of full SoC.

12. The apparatus of claim 11, wherein the instructions, when executed, cause the apparatus to:
determine whether the charger (16) has been turned on for a period of time greater than a third threshold amount of time based on determining that the current associated with the charger is not less than the second threshold current; and
cause the charger (16) to be turned off based on determining that the charger has been turned on for the period of time greater than the third threshold amount of time; and preferably
wherein the third threshold amount of time is approximately 1 day.

13. The apparatus of any of claims 10 to12, wherein the instructions, when executed, cause the apparatus to:
periodically turn on the charger (16) so as to cause the battery (18) to be charged to a full state of charge (SoC).

14. The apparatus of any of claims 9 to 12, wherein the instructions, when executed, cause the apparatus to:
subsequent to charging the battery (18) to within a threshold amount of 100% state of charge (SoC), determine that the at least one battery (18) has not been fully charged based on a measured current; and
cause the battery (18) to be charged until the measured current is within a threshold corresponding to the threshold amount of 100% SoC.

15. A method of any of claims 1-8, comprising:
determining that an elevator has not been operated for an amount of time greater than a first threshold;
determining a temperature associated with a battery (18) of the elevator based on applying a testing charging voltage to the battery (18) via a charger (16), wherein a value of the charging voltage is based on the temperature;
determining that it has been greater than a second threshold amount of time since the elevator was last run and application of charging voltage;
determining that a current associated with the charger (16) is greater than a first threshold current and maintaining the testing voltage turned on as charging voltage, wherein a value of the charging voltage is based on the temperature;
determining that the elevator has not been operated for an amount of time greater than the second threshold;
determining that the current associated with the charger is less than a second threshold current; and
removing the charging voltage from the battery (18); and preferably
wherein the first threshold current corresponds to approximately the current that the battery (18) accepts when in a 70% full state of charge (SoC) condition, and wherein the second threshold current corresponds to approximately the current that the battery (18) accepts when in an 80% full SoC condition.

## Patentansprüche

1. Verfahren (300) zum Rückgewinnen von Energie, welche dem Betrieb eines Aufzugs zugeordnet ist, umfassend:
Bestimmen eines Akkuladestroms, welcher durch ein Akkuladegerät (16) bereitgestellt ist, durch eine Verarbeitungsvorrichtung (34),
Schätzen eines Ladezustands (SoC) von mindestens einem Akku (18) basierend auf einer Ladestromakzeptanzfähigkeit; und
Veranlassen eines Ladens des mindestens einen Akkus (18) auf eine Schwellenwertdauer von 100 % eines SoC durch die Verarbeitungsvorrichtung (34), d. h. einen Grad oder einen Wert, welcher weniger als einen SoC von 100 % beträgt, so dass der Akku (18) dazu in der Lage ist, Energie zurückzugewinnen, welche dem Aufzugsbetrieb zugeordnet ist;
**dadurch gekennzeichnet, dass** das Verfahren nach einem Ladens des mindestens einen Akkus (18) auf innerhalb der Schwellenwertdauer eines SoC von 100 % ferner ein Bestimmen durch die Verarbeitungsvorrichtung umfasst, dass der mindestens eine Akku (18) nicht vollständig geladen wurde, d. h. auf ein SoC von ungefähr 100 % für eine Zeitdauer, welche größer als ein zweiter Schwellenwert ist; und
Veranlassen durch die Verarbeitungsvorrichtung, dass der mindestens eine Akku (18) für eine Zeitdauer geladen wird, welche größer als ein dritter Schwellenwert ist, welcher verursacht, dass der Akku (18) auf einen SoC von ungefähr 100 % geladen wird, basierend auf einem Bestimmen, dass der mindestens eine Akku (18) für die Zeitdauer, welche größer als der zweite Schwellenwert ist, nicht vollständig geladen wurde.

2. Verfahren (300) nach Anspruch 1, wobei der Akku auf einen SoC unter 100 % geladen wird; und/oder
wobei der Schwellenwert einem Wert in dem Bereich von 60 % bis 95 % des vollständigen SoC entspricht.

3. Verfahren (300) nach Anspruch 1 oder 2, wobei das Bestimmen des Ladestroms und des SoC nach einer Entspannungszeit vorgenommen wird, wobei erfasst wird, wenn die Aufzugskabine fährt und eine Eigenzeit gewartet wird basierend auf dem Belastungsstress, welcher auf den Akku (18) angewendet wird.

4. Verfahren (300) nach Anspruch 1, 2 oder 3, wobei die Temperatur, welche dem mindestens einen Akku (18) zugeordnet ist, erfasst wird, um eine Test- und Ladespannung anzupassen, um stabile Ladestromschwellenwerte zu behalten, um einen SoC zu schätzen und die Akkulebensdauer zu verlängern.

5. Verfahren (300) nach einem der vorstehenden Ansprüche, wobei die Größe und Eigenschaften des mindestens einen Akkus (18) dazu verwendet werden, um die Ladestromschwellenwerte auszuwählen, um einen SoC zu schätzen.

6. Verfahren (300) nach einem der vorstehenden Ansprüche, wobei ein Störstrom geschätzt wird und dazu erachtet wird, ein Beeinflussen des Bestimmens des Ladestroms zu verhindern.

7. Verfahren (300) nach einem der vorstehenden Ansprüche, wobei der mindestens eine Akku (18) einen Bleiakku umfasst.

8. Verfahren nach einem der vorstehenden Ansprüche, wobei der zweite Schwellenwert ungefähr 30 Tage beträgt, und wobei der dritte Schwellenwert ungefähr 1 Tag beträgt

9. Verfahren (300) nach einem der vorstehenden Ansprüche, ferner umfassend:
Veranlassen, dass der Aufzug betrieben wird; und
Laden des mindestens einen Akkus (18) basierend auf Energie, welche durch den Betrieb des Aufzugs erzeugt wird.

10. Gerät, umfassend:
mindestens einen Prozessor (34); und
einen Speicher (36), auf welchem Anweisungen gespeichert sind, welche das Gerät zu Folgendem veranlassen, wenn sie ausgeführt werden:
Bestimmen, dass sie größer ist als eine erste Schwellenwertzeitdauer, seit ein Aufzug zuletzt gefahren ist;
Veranlassen eines Ladegeräts (16), angeschaltet zu werden, um einen Akku (18) des Aufzugs aufzuladen;
Festlegen einer Ladespannung gemäß mindestens einem von einer Akkutemperatur und einer Umgebungstemperatur;
Bestimmen, dass sie größer ist als eine zweite Schwellenwertzeitdauer, seit der Aufzug zuletzt gefahren ist und Anwenden der Ladespannung:
Bestimmen, dass ein Strom, welcher dem Ladegerät (18) zugeordnet ist, größer ist als ein erster Schwellenwertstrom basierend auf einer oder mehreren Akkueigenschaften; und
Veranlassen des Ladegeräts (16) angeschaltet zu bleiben, um den Akku (18) zu laden;
**dadurch gekennzeichnet, dass** nach einem Laden des mindestens einen Akkus (18) auf innerhalb der Schwellenwertdauer eines SoC von 100 %, d. h. ein Grad oder ein Wert ist geringer als ein SoC von 100 %, die Anweisungen den Speicher (36) dazu veranlassen, durch die Verarbeitungsvorrichtung (34) zu bestimmen, dass der mindestens eine Akku (18) nicht vollständig geladen wurde, d. h. auf einen SoC von ungefähr 100 % für eine Zeitdauer, welche größer als ein zweiter Schwellenwert ist; und
Veranlassen durch die Verarbeitungsvorrichtung (34), dass der mindestens eine Akku (18) für eine Zeitdauer geladen wird, welche größer als ein dritter Schwellenwert ist, was den Akku (18) dazu veranlasst, auf einen SoC von ungefähr 100 % geladen zu werden, basierend auf einem Bestimmen, dass der mindestens eine Akku (18) nicht vollständig geladen wurde für die Zeitdauer, welche größer ist als der zweite Schwellenwert; und vorzugsweise
wobei der zweite Schwellenwert ungefähr 30 Tage beträgt, und wobei der dritte Schwellenwert ungefähr 1 Tag beträgt.

11. Gerät nach Anspruch 10, wobei die Anweisungen das Gerät zu Folgendem veranlassen, wenn sie ausgeführt werden:
Bestimmen, ob der Ladestrom geringer als ein zweiter Schwellenwertstrom ist, nachdem das Ladegerät (16) dazu veranlasst wird, ausgeschaltet zu werden; und vorzugsweise
wobei der erste Schwellenwert ungefähr 60 % eines vollständigen Ladezustands (SoC) entspricht, und wobei der zweite Schwellenwert ungefähr 95 % eines vollständigen SoC entspricht.

12. Gerät nach Anspruch 11, wobei die Anweisung das Gerät zu Folgendem veranlassen, wenn sie ausgeführt werden:
Bestimmen, ob das Ladegerät (16) seit einer Zeitdauer angeschaltet ist, welche größer als eine dritte Schwellenwertzeitdauer ist, basierend auf einem Bestimmen, dass der Strom, welcher dem Ladegerät zugeordnet ist, nicht geringer als der zweite Schwellenwertstrom ist; und
Veranlassen des Ladegeräts (16), abgeschaltet zu werden, basierend auf einem Bestimmen, dass das Ladegerät seit einer Zeitdauer angeschaltet ist, welche größer als die dritte Schwellenwertzeitdauer ist; und vorzugsweise
wobei die dritte Schwellenwertzeitdauer ungefähr 1 Tag beträgt.

13. Gerät nach einem der Ansprüche 10 bis 12, wobei die Anweisungen das Gerät zu Folgendem veranlassen, wenn sie ausgeführt werden:
periodisches Anschalten des Ladegeräts (16), um den Akku (18) dazu zu veranlassen, auf einen vollständigen Ladezustand (SoC) geladen zu werden.

14. Gerät nach einem der Ansprüche 9 bis 12, wobei die Anweisungen das Gerät zu Folgendem veranlassen, wenn sie ausgeführt werden:
Bestimmen, dass der mindestens eine Akku (18) nach dem Laden des Akkus (18) auf innerhalb einer Schwellenwertdauer von 100 % eines Ladezustand (SoC) basierend auf einem gemessenen Strom nicht vollständig geladen wurde; und
Veranlassen des Akkus (18), geladen zu werden, bis der gemessene Strom innerhalb eines Schwellenwerts liegt, welcher der Schwellenwertdauer eines SoC von 100 % entspricht.

15. Verfahren nach einem der Ansprüche 1-8, umfassend:
Bestimmen, dass ein Aufzug für eine Zeitdauer nicht betrieben wurde, welche größer als ein erster Schwellenwert ist;
Bestimmen einer Temperatur, welche einem Akku (18) des Aufzugs zugeordnet ist, basierend auf einem Anwenden einer Testladespannung auf den Akku (18) über das Ladegerät (16), wobei ein Wert der Ladespannung auf der Temperatur basiert;
Bestimmen, dass sie größer ist als eine zweite Schwellenwertzeitdauer seit der Aufzug zuletzt gefahren ist und Anwenden einer Ladespannung;
Bestimmen, dass ein Strom, welcher dem Ladegerät (16) zugeordnet ist, größer als ein erster Schwellenwertstrom ist und Angeschaltetbleiben der Testspannung, wobei ein Wert der Ladespannung auf der Temperatur basiert;
Bestimmen, dass der Aufzug für eine Zeitdauer nicht betrieben wurde, welche größer als er zweite Schwellenwert ist;
Bestimmen, dass der Strom, welcher dem Ladegerät zugeordnet ist, geringer als ein zweiter Schwellenwertstrom ist; und
Entfernen der Ladespannung von dem Akku (18); und vorzugsweise
wobei der erste Schwellenwertstrom ungefähr dem Strom entspricht, den der Akku (18) akzeptiert, wenn er in einem zu 70 % vollständigen Ladezustand (SoC) ist, und wobei der zweite Schwellenwertstrom ungefähr dem Strom entspricht, welcher der Akku (18) akzeptiert, wenn er in einem zu 80 % vollständigen SoC-Zustand ist.

## Revendications

1. Procédé (300) pour récupérer de l'énergie associée au fonctionnement d'un ascenseur, comprenant :
la détermination, par un dispositif de traitement (34), d'un courant de charge de batterie fourni par un chargeur de batterie (16) ;
l'estimation d'un état de charge (SoC) d'au moins une batterie (18) sur la base de la capacité d'acceptation de courant de charge ; et
l'entraînement, par le dispositif de traitement (34), d'une charge de l'au moins une batterie (18) dans les limites d'une valeur seuil de 100 % de SoC, c'est-à-dire un niveau ou une valeur qui est inférieur (e) à 100 % de SoC, de sorte que la batterie (18) est capable de récupérer de l'énergie associée au fonctionnement de l'ascenseur ;
**caractérisé par** le procédé comprenant en outre, après la charge de l'au moins une batterie (18) dans les limites de la valeur seuil de 100 % de SoC, la détermination, par le dispositif de traitement, que l'au moins une batterie (18) n'a pas été complètement chargée, c'est-à-dire à environ 100 % de SoC pendant une durée supérieure à un deuxième seuil ; et
l'entraînement, par le dispositif de traitement, de la charge de l'au moins une batterie (18) pendant une durée supérieure à un troisième seuil, ce qui entraîne la charge de la batterie (18) à environ 100 % de SoC, sur la base de la détermination que l'au moins une batterie (18) n'a pas été complètement chargée pendant la durée supérieure au deuxième seuil.

2. Procédé (300) selon la revendication 1, dans lequel la batterie est chargée à moins de 100 % de SoC ; et/ou
dans lequel le seuil correspond à une valeur dans la plage de 60 % à 95 % pour cent du SoC complet.

3. Procédé (300) selon la revendication 1 ou 2, dans lequel la détermination du courant de charge et du SoC est effectuée après un temps de relaxation en détectant le moment où la cabine d'ascenseur est utilisée et en attendant un temps approprié sur la base de la contrainte de charge appliquée à la batterie (18).

4. Procédé (300) selon la revendication 1, 2 ou 3, dans lequel la température associée à l'au moins une batterie (18) est détectée pour ajuster la tension d'essai et de charge afin de maintenir des seuils de courant de charge stables pour estimer le SoC et prolonger la durée de vie de la batterie.

5. Procédé (300) selon une quelconque revendication précédente, dans lequel la taille et les caractéristiques de l'au moins une batterie (18) sont utilisées pour sélectionner les seuils de courant de charge afin d'estimer le SoC.

6. Procédé (300) selon une quelconque revendication précédente, dans lequel un courant parasite est estimé et pris en compte pour éviter d'avoir un impact sur la détermination du courant de charge.

7. Procédé (300) selon une quelconque revendication précédente, dans lequel l'au moins une batterie (18) comprend une batterie au plomb.

8. Procédé selon une quelconque revendication précédente, dans lequel le deuxième seuil est d'environ 30 jours, et dans lequel le troisième seuil est d'environ 1 jour

9. Procédé (300) selon une quelconque revendication précédente, comprenant en outre :
l'entraînement du fonctionnement de l'ascenseur ; et
la charge de l'au moins une batterie (18) sur la base de l'énergie générée par le fonctionnement de l'ascenseur.

10. Appareil comprenant :
au moins un processeur (34) ; et
une mémoire (36) sur laquelle sont stockées des instructions qui, lorsqu'elles sont exécutées, amènent l'appareil à :
déterminer qu'une première durée seuil a été dépassée depuis qu'un ascenseur a été utilisé pour la dernière fois ;
entraîner la mise sous tension d'un chargeur (16) pour charger une batterie (18) de l'ascenseur ;
régler une tension de charge en fonction d'au moins l'une de la température de la batterie et de la température ambiante ;
déterminer qu'une deuxième durée seuil a été dépassée depuis que l'ascenseur a été utilisé pour la dernière fois de l'ascenseur et l'application de la tension de charge ;
déterminer qu'un courant associé au chargeur (18) est supérieur à un premier courant seuil sur la base d'une ou plusieurs caractéristiques de batterie ; et
entraîner le maintien de la mise sous tension du chargeur (16) pour charger la batterie (18) ;
**caractérisé en ce que**, après la charge de l'au moins une batterie (18) dans les limites de la quantité seuil de 100 % de SoC, c'est-à-dire un niveau ou une valeur qui est inférieur(e) à 100 % de SoC, les instructions amènent la mémoire (36) à déterminer, par le dispositif de traitement (34), que l'au moins une batterie (18) n'a pas été complètement chargée, c'est-à-dire à environ 100 % de SoC pendant une durée supérieure à un deuxième seuil ; et
entraîner, par le dispositif de traitement (34), la charge de l'au moins une batterie (18) pendant une durée supérieure à un troisième seuil, ce qui entraîne la charge de la batterie (18) à environ 100 % de SoC, sur la base de la détermination que l'au moins une batterie (18) n'a pas été complètement chargée pendant la durée supérieure au deuxième seuil ; et de préférence
dans lequel le deuxième seuil est d'environ 30 jours, et dans lequel le troisième seuil est d'environ 1 jour.

11. Appareil selon la revendication 10, dans lequel les instructions, lorsqu'elles sont exécutées, amènent l'appareil à :
déterminer si le courant de charge est inférieur à un second courant seuil après l'entraînement de la mise hors tension du chargeur (16) ; et de préférence
dans lequel le premier courant seuil correspond à environ 60 % de l'état de charge (SoC) complet, et dans lequel le second courant seuil correspond à environ 95 % du SoC complet.

12. Appareil selon la revendication 11, dans lequel les instructions, lorsqu'elles sont exécutées, amènent l'appareil à :
déterminer si le chargeur (16) a été mis sous tension pendant une période de temps supérieure à une troisième durée seuil sur la base de la détermination que le courant associé au chargeur n'est pas inférieur au second courant seuil ; et
entraîner la mise hors tension du chargeur (16) sur la base de la détermination que le chargeur a été mis sous tension pendant la période de temps supérieure à la troisième durée seuil ; et de préférence
dans lequel la troisième durée seuil est d'environ 1 jour.

13. Appareil selon l'une quelconque des revendications 10 à 12, dans lequel les instructions, lorsqu'elles sont exécutées, amènent l'appareil à :
mettre sous tension périodiquement le chargeur (16) de manière à charger la batterie (18) jusqu'à un état de charge (SoC) complet.

14. Appareil selon l'une quelconque des revendications 9 à 12, dans lequel les instructions, lorsqu'elles sont exécutées, amènent l'appareil à :
après la charge de la batterie (18) dans les limites d'une valeur seuil de 100 % d'état de charge (SoC), déterminer que l'au moins une batterie (18) n'a pas été complètement chargée sur la base d'un courant mesuré ; et
entraîner la charge de la batterie (18) jusqu'à ce que le courant mesuré soit dans les limites d'un seuil correspondant à la quantité seuil de 100 % de SoC.

15. Procédé selon l'une quelconque des revendications 1 à 8, comprenant :
la détermination qu'un ascenseur n'a pas été actionné pendant une durée supérieure à un premier seuil ;
la détermination d'une température associée à une batterie (18) de l'ascenseur sur la base de l'application d'une tension de charge d'essai à la batterie (18) par l'intermédiaire d'un chargeur (16), dans lequel une valeur de la tension de charge est basée sur la température ;
la détermination qu'une deuxième durée seuil a été dépassée depuis que l'ascenseur a été utilisé pour la dernière fois de l'ascenseur et l'application d'une tension de charge ;
la détermination qu'un courant associé au chargeur (16) est supérieur à un premier courant seuil et le maintien de l'activation de la tension d'essai en tant que tension de charge, dans lequel une valeur de la tension de charge est basée sur la température ;
la détermination que l'ascenseur n'a pas été actionné pendant une durée supérieure au deuxième seuil ;
la détermination que le courant associé au chargeur est inférieur à un second courant seuil ; et
la désactivation de la tension de charge de la batterie (18) ; et de préférence
dans lequel le premier courant seuil correspond à environ le courant que la batterie (18) accepte lorsqu'elle est dans un état de charge (SoC) complet de 70 %, et dans lequel le second courant seuil correspond à environ le courant que la batterie (18) accepte lorsqu'elle est dans un état SoC complet de 80 %.
